# EUROPEAN PATENT SPECIFICATION

(11) **EP 0 369 965 B1**
(45) Date of publication and mention of the grant of the patent: **17.07.1996**
(21) Application number: 89850379.2
(22) Date of filing: 31.10.1989
(51) Int. Cl.: G06T 15/10

(54) **Image display apparatus**
Bildanzeigegerät
Appareil d'affichage d'image

(30) Priority: 14.11.1988 JP 285698/88
(43) Date of publication of application: 23.05.1990
(73) Proprietor: International Business Machines Corporation, Armonk, N.Y. 10504 (US)
(72) Inventor: Matsumoto, Takashi, Setagaya-ku Tokyo-to (JP)
(74) Representative: Burt, Roger James, Dr.

(56) References cited:
- WO-A-87/04545
- GB-A- 2 043 972

## Description

### A. Field of the invention

This invention relates to an image display apparatus, and more particularly to an apparatus of a simple configuration, capable of performing clipping at a high speed for any three-dimensional area.

### B. Prior art

Various techniques have been studied on two dimensional clipping so far. Because three-dimensional data has generally been used for CAD (computer aided design) and CG (computer graphics) in recent years, clipping for three-dimensional area has been important to eliminate unnecessary data and image processing images. Several techniques have been developed for the three-dimensional clipping. However, it is difficult to embody these techniques with hardware and to perform them at a high speed because they cannot realize the processing for each pixel. That is, because recent high-speed three-dimensional image display units have high-speed hardware to convert polygons into data for each pixel, a technique is needed to simultaneously perform the clipping for the three-dimensional area on such hardware. However, the prior art technique does not meet the above requirements. For example, there is a technique called Cyrus-Beck algorithm for clipping to any convex three-dimensional area. The Cyrus-Beck algorithm clips line segments using the inward normal line on the boundary surface in the area. To execute clipping with the technique when a polygon is developed into pixels, it is necessary to calculate the inner product by referencing every inward normal line on the boundary surface for each pixel. However, this is too complex a calculation for each pixel to embody with hardware.

For details of the Cyrus-Beck algorithm and other techniques, see, for example, the chapter on clipping in "PROCEDURAL ELEMENTS FOR COMPUTER GRAPHICS" by David F Roger, issued by the McGraw-Hill Book Company in 1985.

GB-A-2043972 discloses a display technique in which objects are defined in terms of a Boolean expression relating a number of planes in a three dimensional space. What is to be shown of each part of an object is determined from depth values indicative of the distance of each plane from the display screen, first and second increment values respectively indicative of depth changes between two raster points in two mutually non-parallel directions, and property codes indicative of whether each plane is a front surface or a back surface of the image and of the positions of the planes in the boolean expression of the set of planes including that plane. At each pixel position, the planes making up each phrase of the Boolean expression are compared in a particular sequence with a current plane to determine whether or not the respective point of the object is visible at the position.

### C. Problems to be solved by the invention

This invention is made by considering the above situation. An object of it is to provide an image display apparatus that is provided with three-dimensional clipping at a high speed by simple processing for each pixel and is capable of generating images.

### D. Means for solving the problem

The present invention is defined in the attached claims.

To attain the above object, the invention develops and expands the so-called Z-buffer method (depth buffer method) to the clipping, wherein a depth value is developed for each pixel over surfaces constituting an object to be displayed, and then an image is generated while removing hidden surfaces with reference to the depth values. That is, several buffers are prepared to store the depth value for each pixel on the screen. Then, the depth values on the boundary surface of the clipping area are developed by the same procedure as that of developing the values on the surfaces constituting the object to be displayed, and stored in these buffers. Then the object to be displayed is developed into data for each pixel, and it is judged whether or not the data is for the object in the clipping area using the depth value of the boundary surface in the buffers. If the data is for an object in the area, then it may be actually displayed on the screen, and therefore it is decided whether or not to display the data on the screen after further removing hidden surfaces. If the data is for an object out of the area, the data is discarded because the data for the pixel cannot be displayed on the screen. By repeating the above processing for each object and each pixel, an image provided with three-dimensional area clipping is generated.

### E. Advantages of the invention

This invention makes it possible to quickly generate images with a little calculation and easily realize hardware implementation like the system shown in the embodiment because clipping for any three-dimensional area can be made only by comparing depth values with values in buffers when developing a display object into pixels.

### F. Brief Description of the Drawings:

Figs. 1 and 2 are diagrams explaining the principle of this invention.

Fig. 3 is a diagram showing a buffer configuration per pixel used for the embodiment.

Fig. 4 is a diagram explaining the FBP and BBP.

Fig. 5 is a diagram explaining the EFBP and EBBP.

Fig. 6 is a diagram explaining the clipping out of convex area.

Fig. 7 is a diagram explaining three-dimensional synthesis of images.

Fig. 8 is a diagram showing a system configuration of the system in one embodiment of this invention.

Fig. 9 is a diagram showing the input sequence of span data to a pixel processor array.

Fig. 10 is a diagram showing the pixel processor array configuration.

Fig. 11 is a diagram showing the pixel processor configuration.

### G. Embodiment

Now, an embodiment of the invention will be explained by referring to the drawings. In the following embodiment, the clipping is limited to that for any convex three-dimensional area in view of practicability, and the number of buffers for each pixel is also minimized to effectively harmonize with the hidden surface removal method based on the Z-buffer method. However, unless the number of buffers for each pixel is limited, clipping for any three-dimensional area including a concave area is possible. Similarly to a conventional high-speed image display unit, a curved surface can be approximated with several polygons.

### G1. Clipping-area discriminating condition

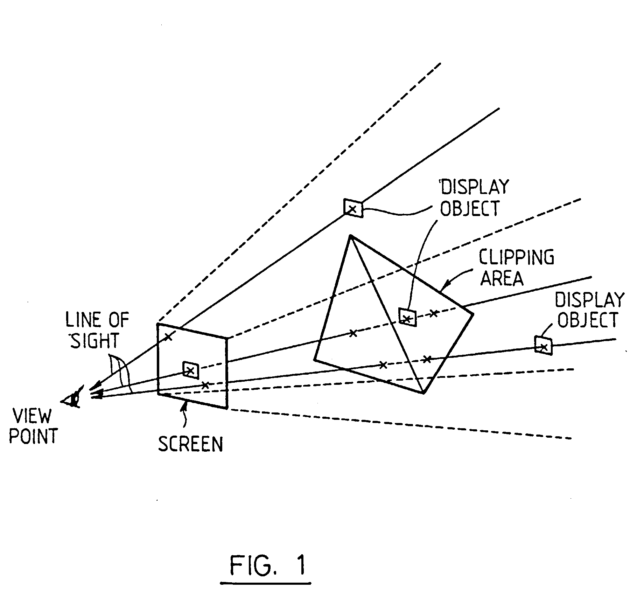

The line of sight either intersects the three-dimensional convex area twice or does not intersect it (see Fig. 1). Here, the boundary is not included in the area. When a point on an object is in the clipping area and is actually projected to a pixel on the screen, the line of sight passing through the pixel intersects the clipping area twice and the depth value at the projected point must range between the depth values of the two intersections.

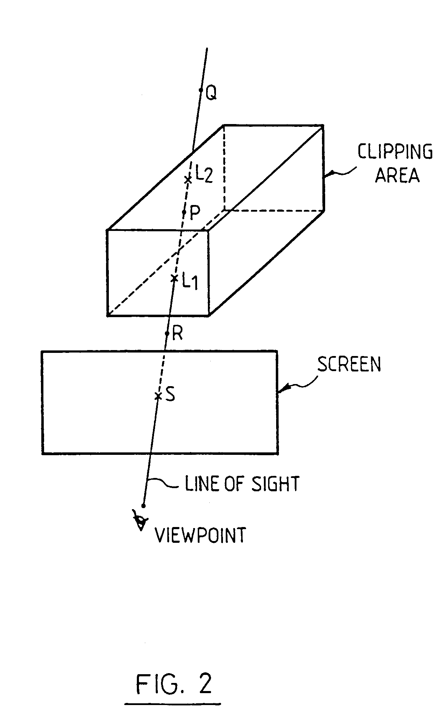

The following explanation is made using a more detailed example. Assume that the rectangle shown in Fig. 2 is a clipping area, only the object in the area is displayed, and the point P on the object is projected to the point S on the screen. When the depth values ZL1 and ZL2 for L1 and L2, which are two intersections between the rectangle of the clipping area, and the line of sight passing through the point S are previously obtained from the pixel at the point S and held, it is sufficient to display only the point P (where the condition "ZL1 < ZP < ZL2" is effected by assuming the depth value at the point P as ZP) on the screen. Therefore, the points Q and R in Fig. 2 are not displayed because they do not meet the above condition. Note that the smaller depth value indicate the sides nearer to the front hereinafter.

### G2. Clipping technique

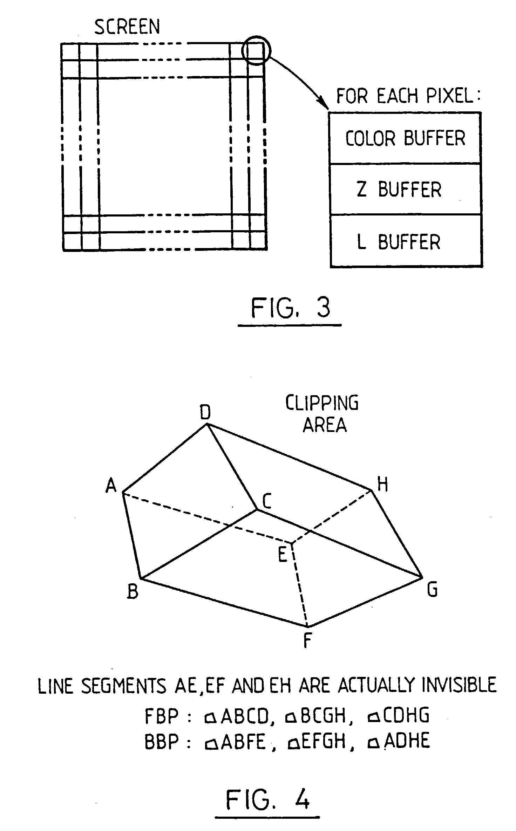

To perform clipping according to the above Section El, two buffer to store depth values for each pixel is needed for ZL1 and ZL2. In this case, the buffer at the rear point or the buffer corresponding to ZL2 can be shared with the conventional Z-buffer for removing the hidden surface and line. Therefore, the buffer to store depth value corresponding to ZL1 is provided for each pixel, which is called "L buffer" (limit Z buffer). Thus, each pixel consists of the color buffer, Z-buffer, and L-buffer (see Fig. 3). Two types of the clipping techniques are described in the following. The technique (1) features that the amount of calculation is small, and the technique (2) features that clipping can be performed for a common area when several clipping areas are used.

### Clipping technique (1)

The procedure is described below in order.
(1) Boundary surfaces of the clipping area are classified into visible boundary surfaces which are nearer to the viewpoint (FBP: Front-facing Boundary Polygons) and invisible boundary surfaces which are farther from the viewpoint (BBP: Back-facing Boundary Polygons). This is explained in more detail by using Fig. 4. The inside of a hexahedron ABCDEFGH can be assumed to be a clipping area and the hexahedron is seen as shown in Fig. 4 when it is displayed on a screen. The dotted lines in Fig. 4 represent the back of the area which is not actually displayed. In this case, quadrangles ABCD, BCGF, and CDHG are considered as the FBP's, and quadrangles ABFE, EFGH, and ADHE as the BBP's.
(2) For all pixels, the color-, Z-, and L-buffers are initialized into appropriate values. For example, the color buffers are initialized into the background color, the Z-buffers into the farthest point values, and the L-buffers into the nearest point values.
(3) All polygons for the FBP's are developed into data for each pixel by the polygon development method normally used for the Z-buffer method. In this case, the color- and Z-buffers are not changed but the L-buffer value is updated to a new depth value only when the depth value for the pixel is the value showing that the depth value is farther than the present value of the L-buffer of the pixel. Similarly, all polygons for the BBP's are developed into data for each pixel. In this case, the color- and L-buffers are not changed but the Z-buffer value is updated to a new depth value only when the depth value for the pixel is the value showing that the depth value is nearer than the present value of the Z-buffer of the pixel.
(4) All objects to be displayed (polygons, straight lines, and points) are developed into data for each pixel with the method same as that used for development of polygons for the FBP's and BBP's. In this case, the L-buffer is not changed but values of the color- and Z-buffer of the pixel are changed to the newly developed values only when the following three conditions are established in each pixel.
   a. The developed depth value is a value representing the position nearer than the value held in the Z-buffer.
   b. The developed depth value is a value representing the position farther than the value held in the L-buffer.
   c. The pixel is accessed once or more when the polygons for the FBP's or BBP's are developed. In other words, it was a processing object.

In the technique (1), the clipping is considered for the area made by combining several clipping areas. If the clipping area is a single convex polyhedron area, new depth values can be set without comparison with the present values of the L- or Z- buffer when the polygons for the FBP's or BBP's are developed in the above procedure (3). To check the condition "c" in the procedure (4), the processing made for each pixel is stored in the procedure (3). Therefore, in practice, a one-bit flag is prepared for each pixel.

### Clipping technique (2)

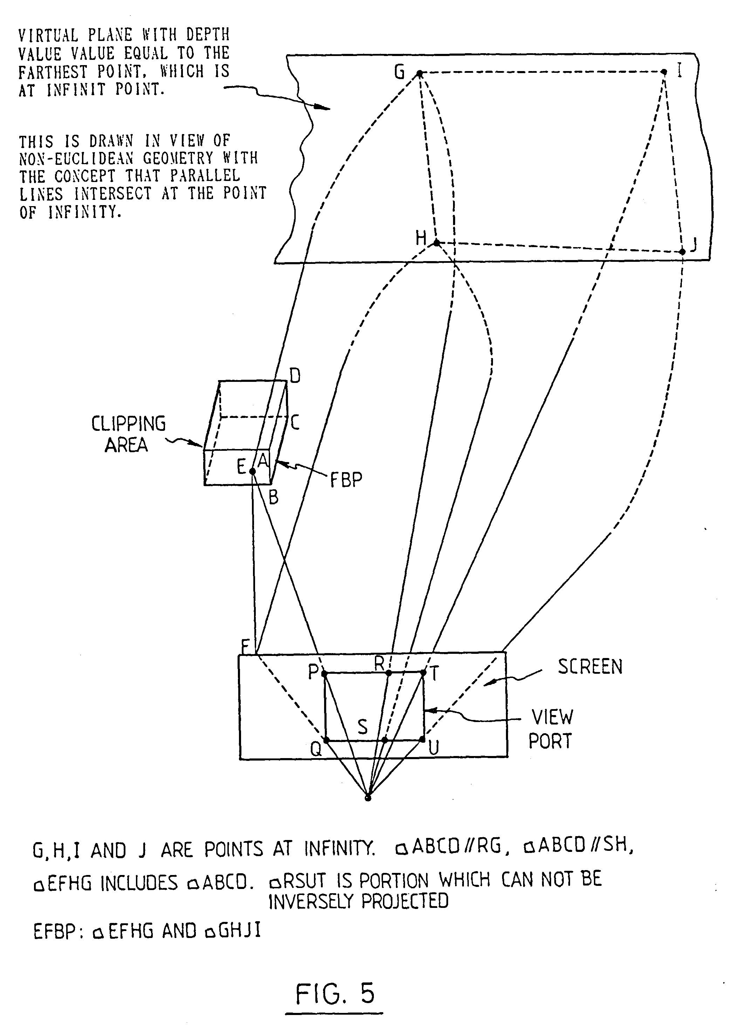

The procedure is described below in order.
(1) The boundary surfaces of the clipping area are classified into visible boundary surfaces which are nearer to the viewpoint (FBP's: Front-facing Boundary Polygon) and invisible boundary surface's which are farther from the viewpoint (BBP's: Back-facing Boundary Polygon).
(2) The FBP's and BBP's are expanded as follows. For each FBP, the whole screen or a view port, if it is on the screen, is inversely projected on to the plane including the objective FBP to obtain its image of "EFBP" (Extend Front-facing Boundary Polygon). In this case, portion that cannot be projected may exist on the screen or view port because the line of sight for inverse projection and the plane including the FBP have no intersection at the screen side of the viewpoint. If so, the portion of the screen or view port which cannot be projected is considered to have an EFBP of the farthest depth value, and finally two sheets of EFBP's are made from one sheet of FBP (see Fig. 5). Similarly, the EBBP (Extended Back-facing Boundary Polygon) is obtained from all BBP's.
(3) For all pixels, the color-, Z-, and L-buffers are initialized into appropriate values. For example, the color-buffers are initialized into the background color, the Z-buffers into the farthest values, and the L-buffers into the nearest values.
(4) Polygons for alt the EFPB's are developed into data for each pixel with the polygon development method normally used for the Z-buffer method. In this case, the color- and Z-buffers are not-changed, but the L-buffer value is updated to a new depth value only when the depth value for the pixel is the value showing that the depth value is farther than the present value of the L-buffer of the pixel. Similarly polygons for all the EBBP are developed into data for each pixel. In this case, the color- and L-buffers are not changed, but the Z-buffer value is updated to a new depth value only when the depth value for the pixel is the value showing that the depth value is nearer than the present value of the Z-buffer of the pixel.
(5) All objects to be displayed (polygons, straight lines, and points) are developed into data for each pixel with the method same as that used for development of polygons for the EFBP's and EBBP's. In this case, the L-buffer is not changed, but the color- and Z-buffer values of the pixel are updated to the newly developed values only when the following two conditions are satisfied in each pixel.
   a. The developed depth value is a value representing the position nearer than the value held in the Z-buffer.
   b. The developed depth value is a value representing the position farther than the value held in the L-buffer.

### G3. Expansion of technique

The basic techniques for clipping into a convex three-dimensional polyhedral area are described in Section G2. View port clipping for the view port on the screen, clipping out of convex three-dimensional areas, and three-dimensional synthesis of images by applying the clipping can be attained by only slightly modifying the above basic techniques. The technique expansion method for application will be described in the following.

### View port clipping

When the Z and L buffers are initialized in either the techniques (1) or (2), all pixels outside the view port are initialized so that the Z-buffer depth values are values representing positions nearer than the L-buffer depth values. By this, the pixels outside the view port do not include the depth values between L- and Z-buffer values, realizing the view-port clipping because no object to be displayed is written.

The technique (1) includes the condition that, to update pixels, the pixel must have been accessed when the boundary surface (FBP or BBP) was developed. Usually, to check the above, a flag is prepared for each pixel and set to the value showing "accessed" when the boundary surface is developed. Therefore, the view port clipping can be performed by setting the flag to the value showing "not accessed" for every pixel outside the view port immediately before an object to be displayed is developed into pixels.

### Clipping to outside of an area

The outside of a convex three-dimensional polyhedral area is a concave area. If the number of buffers to store depth values is more than that of intersections between the line of sight and the area for each pixel as previously mentioned, the clipping can be performed for the concave area similarly to the procedure described in Section G2. The area outside the convex area intersects the line of sight a maximum of only two times. In this case, however, unlike the clipping in the area in Section G2, buffers for depth values of rear intersections cannot be shared with normal Z-buffers. Naturally, the clipping can be performed by preparing two equivalents of the L-buffer for each pixel, and updating the data concerned only when the depth value of the data is nearer than the front value or farther than the back value, and the data is nearer than the Z-buffer value. However, a method using only one Z-buffer and one L-buffer for each pixel is described below which has advantaged in light of the amount of hardware, although the method takes a little more time.

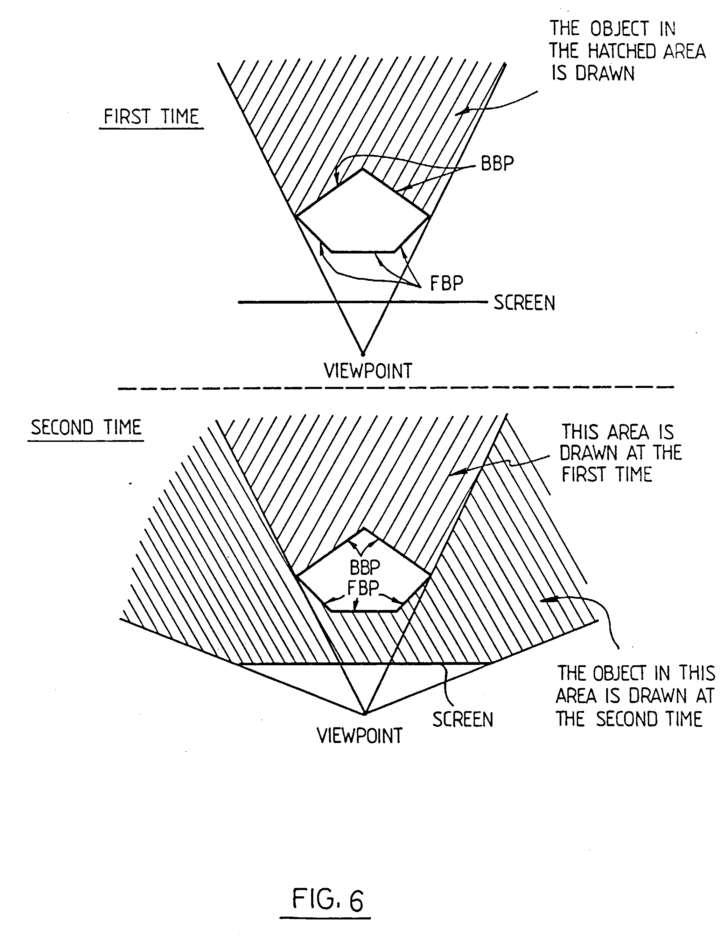

The following method uses the technique (1) as the basic technique to attain the clipping for the area outside a convex three-dimensional area by executing the procedure (1) twice, changing the value set to the L- and Z-buffers for clipping. At the first execution, the BBP's of the convex three-dimensional area are developed to set values to the L-buffers according to the procedure (3) of the technique (1). That is, the operation is executed by replacing the FBP's with the BBP's in the procedure (3). The farthest value is set to the Z-buffer in every pixel. If the farthest value is set in initialization, the Z-buffer is not operated with the procedure (3). The remaining operation is executed according to the technique (1). In the second execution, the color buffer initialization in the procedure (2) is not executed thereby leaving the results of the first execution. In the procedure (3), the nearest values are set to the L-buffers, and the FBP's of the convex three-dimensional area are developed to set values to the Z-buffers. In the procedure (4), the operation is executed using two conditions excluding the condition "c". After these changes, the second execution of the technique (1) is started. As shown in Fig. 6, the object behind the back boundary surfaces (BBP's) of the convex three-dimensional area is drawn at the first execution, and the object before the front boundary surfaces (FBP's) or in the area where the line of sight does not intersect the convex three-dimensional area is drawn at the second execution, and finally the clipping ends.

### Three-dimensional synthesis of images

When the view port clipping is applied, three-dimensional image synthesis can be simply realized. The following describes a method used to generate an image made by three-dimensionally embedding a part of a three-dimensional model in a certain portion of another three-dimensional model. There is another method to separately generate several images together with depth values and synthesize them while judging which image is visible using the depth value for each pixel. However, the following describes the method using only one set of buffers.

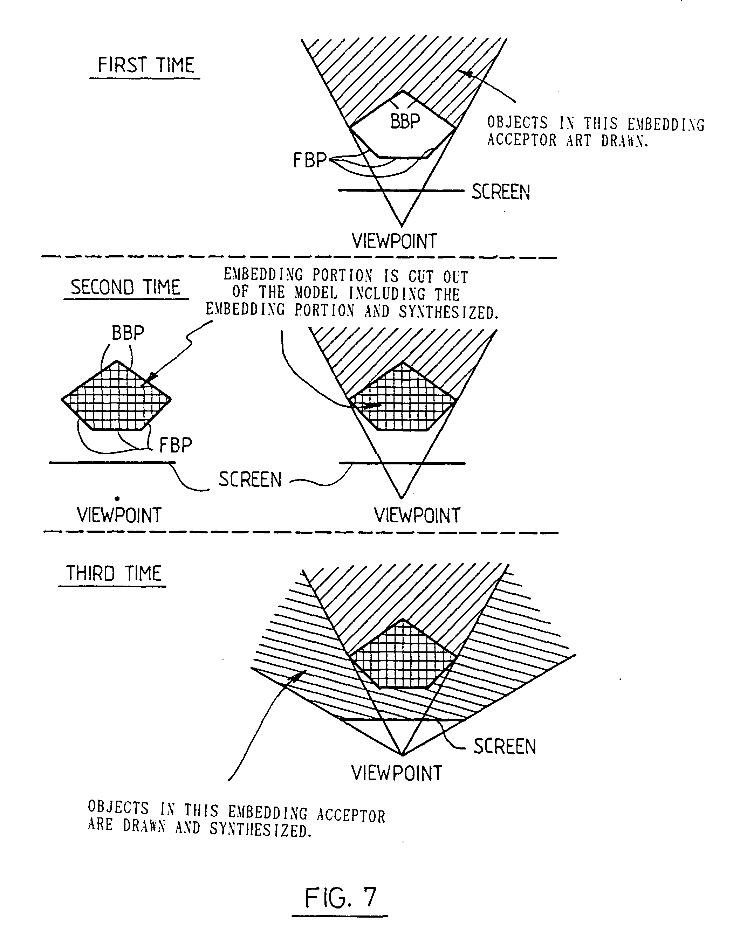

The technique (1) is used for clipping an embedding area (however, the embedding area is restricted to a convex area) with itself used as a clipping area, and the above mentioned clipping technique for outside of an area is used for clipping an area to be embedded, with the outside area of the embedding area positioned at an embedding destination, used as a clipping area. Synthesis is completed by repeating the procedure by modifying the procedure (1) three times. In the first execution, the first half of the clipping for the outside area, that is, the first-time procedure, is executed to draw the object in the embedding destination model. In the second execution, the technique (1) is executed without initializing the color buffers using the embedding area as a clipping area to draw the object in the model including the embedding portion. In this case, however, coordinate conversion is made beforehand so that the boundary surfaces of the clipping area will be matched with the first execution on the screen. In the third execution, the second half of the clipping for the outside area, that is, the second-time procedure, is executed to draw the object in the embedding destination model. By this procedure, the three-dimensionally synthesized image can be generated as shown in Fig. 7.

### G4. Outline of the system

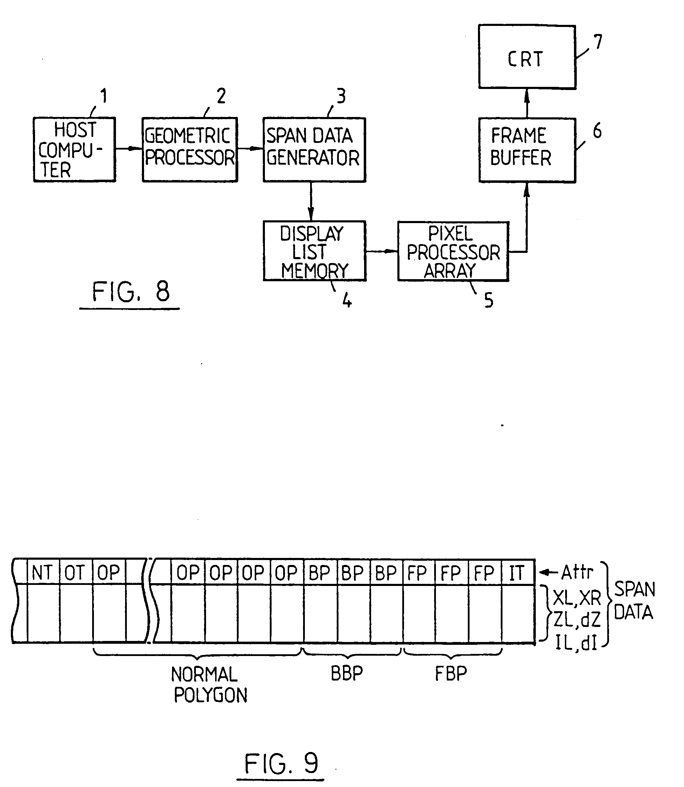

Fig. 8 shows the system configuration of the embodiment of the invention. Though the following describes a system made by embodying main parts with hardware, it is also possible to implement the techniques described in Section E2 with software. In the system, the number of the Z- and L-buffers is limited to the number of pixels for one scan line by combining the scan line method with the techniques described in Section G2. In addition, development of a span (portion occupying the scan line by the polygon) into pixels is made by the pixel processor array, in which the number of the pixel processor corresponds to the number of pixels on the scan line, at a high speed in parallel. The basic function of the image display unit includes hidden-surface removal, Gouraud shading, and three-dimensional area clipping. The following system corresponds to both techniques (1) and (2).

A graphics application is executed on the host computer 1 and the geometric processor 2 is provided with the polygon data represented by world coordinates, that is, the coordinates and color information of each apex of the polygons, and data for the front boundary surfaces (FBP's) and the back boundary surfaces (BBP's), that is, the coordinates of each apex of the boundary surfaces. The geometric processor 2 converts the world coordinates into the coordinates and depth values on the screen through perspective conversion and scale conversion. Also for the technique (2), the processor converts FBP's and BBP's into EFBP's and EBBP's respectively. The span data generator 3 generates span data for each scan line occupied by the polygon from the polygon data on the screen through such technique as DDA (Digital Differential Analyzer). The pixel processor array 5 processes span data for each scan line in batch according to the scan line method. Therefore, the span data generator 3 uses the packet sort method so that span data will be collected for each scan line when outputting span data to the display list memory 4. That is, the display list memory 4 is used for a work area to collect span data for each scan line. Span data collected for each span line is inputted to the pixel processor array 5 through one scan line in the order of span data for FBP's, span data for BBP's, and span data for all display objects (see Fig. 9). The pixel processor array 5 processes span data according to the technique described in Section G2. After the processing of span data for one scan line is completed, color information for each pixel of the results is output to the frame buffer 6. The pixel processor array 5 successively executes the scan line processing. When the processing for one screen ends, the image is completed.

The following is a more detailed description of the processing by the pixel processor array 5, which is the core of the processing. First, span data and its notation are described. Because processing is performed for each scan line, the following are used for the span data on a certain scan line of each polygon.
(Attr, XL, XR, ZL, dZ, IL, dI)

"XL" and "XR" represent the X-coordinates at both ends of the span. In this case, they are called the left end and right end respectively for convenience's sake. "ZL" and "IL" represent a depth value and brightness value, respectively (although three brightness values corresponding to primary colors are necessary for color display, one value is used in this case). "dZ" and "dI" represent the variation of depth value and brightness value (difference: constant because of linear interpolation) when they deviate by one pixel from the XL to the XR side on scan lines. Therefore, span-data development is made by adding "dZ" and "dI" to the depth value and brightness value, respectively, from XL to XR of every pixel. The attribute term "Attr" is included to distinguish FBP's and BBP's from normal polygons or to add a little information for initialization or output of the pixel processor array. The following are values (attributes) to be actually used for "Attr".
- OP:: Normal polygon span (ordinary polygon) out of the boundary surface of the clipping area
- FP:: Boundary surface at the front of the clipping area (FBP)
- BP:: Boundary surface at the back of the clipping area (BBP)
- IT:: Initialization command to the pixel processor (Initialize Token)
- OT:: Output command to the pixel processor (Output Token)
- NT:: Non-operation command to the pixel processor (No operation Token)

The EFBP's and EBBP's used for the technique (2) are shared by the FP and BP, respectively. For span data with Attr of IT, OT, or NT, factors of other span data have no meaning. For span data for FP and BP, IL and dI have no meaning. Data is input to and processed by the pixel processor array for each scan line in the sequence shown in Fig. 9.

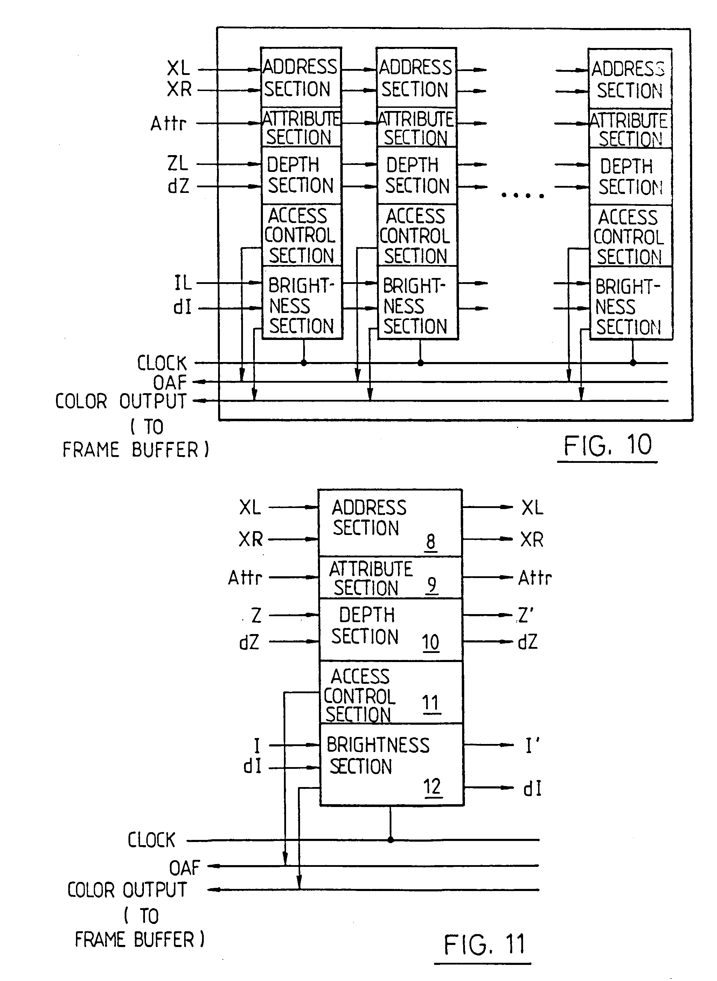

The following describes the pixel processor array. Fig. 10 shows the pixel processor array configuration and Fig. 11 the pixel processor configuration. The pixel processor array has a structure in which the pixel processor is connected by the number of pixels (e.g. 1,024 pixels) on the scan line. The pixel processor receives data from the pixel processor of the preceding stage and give it to that of the subsequent stage. Every pixel processor operates in parallel, while being synchronized with the same clock. This makes it possible to input one span data value to the pixel processor array for each clock.

The following describes the pixel processor according to Fig. 11.

The address section 8 has a proper identification number (pixel_ID) for each pixel processor and the number corresponds to the X-coordinate on the scan line. That is, the pixel processor with the pixel_ID No. 0 is the pixel processor in charge of the first pixel (the left end in this case) on the scan line and the pixel processor with the pixel_ID No. 100 is in charge of 101th pixel.

When assuming that the scan line consists of 1,024 pixels, the pixel_ID numbers range between 0 and 1,023. The address section 8 checks if the pixel related to the address section 8 is included between XL and XR of input span data using the above pixel_ID numbers. That is, it checks the condition shown below.
XL < pixel_ID < XR

The address section directly outputs the input value between XL and XR to the pixel processor of the subsequent stage.

The attribute section 9 analyzes the Attr part of input span data to control the operation of other parts of the pixel processor, and directly outputs the input Attr values to the subsequent stage.

The depth section 10 has the Z- and L-buffers to check the conditions related to depth values, control the Z and L-buffers, and interpolate depth values. The depth section 10 describes the checking of the condition related to depth values and control of the Z- and L-buffers for each Attr value because the operation of the depth section depends on Attr values. When assuming the present value of the Z- and L-buffers as "Z_buf" and "Z_L˝ respectively and the depth value of span data to be input to the pixel processor as "Z":
(1) For Attr = OT and NT
   The depth section executes no operation
(2) For Attr = IT
   The depth section initializes the Z and L buffers.
(3) For Attr = FP
   The depth section checks the condition "Z > Z_L" and updates the L-buffer with "Z" if the condition is met.
(4) For Attr = BP
   The depth section checks the condition "Z <=Z_buf" and updates the Z-buffer with Z if the condition is met.
(5) For Attr = OP
   The depth section checks the condition "Z_L < Z < Z_buf" and updates the Z-buffer with Z if the condition is met.

For the interpolation of depth values, when assuming the variation of the depth value for each pixel of input span data as dZ", the depth section directly outputs "Z" as the depth value to the pixel processor of the subsequent stage, unless the condition checked by the address section is met and outputs "Z + dZ" to the subsequent stage when the condition is met. It directly outputs "dZ" to the subsequent stage as the variation of depth values, regardless of conditions.

The access control section 11 has the following two flags: BAF (Boundary polygon Access Flag) and OAF (Ordinary polygon Access Flag). The BAF is the flag used to check the condition in Item "c" of the procedure (4) in the technique (1) and the OAF is the flag used to realize the techniques (2) and (3) in Section E3. The access control section controls the BAF and OAF. Because the operation depends on Attr values, it is described for each value as follows:
(1) For Attr = NT:
   The control section executes no operation.
(2) For Attr = IT:
   The control section initializes the BAF and OAF.
(3) For Attr = OT:
   The control section outputs the OAF to the outside of the array.
(4) For Attr = FP and BP:
   The control section sets "1" to the BAF if the address section condition is met.
(5) For Attr = OP:
   The control section sets "1" to the OAF if the address- and depth-section conditions and "BAF = 1" are simultaneously met.

The following describes how to use the OAF. Because the pixel processor array is based on the scan line method, it is difficult to realize the technique to repeatedly execute the technique obtained by transforming the technique (1) such as techniques (2) and (3) in Section G3 on the pixel processor array. Therefore, the final image is synthesized on the frame buffer to avoid difficulties. That is, to synthesize images, only pixels with the OAF of "1" are updated on the frame buffer according to the OAF when outputting the brightness value from the pixel processor array to the frame buffer.

The brightness section 12 has the color buffer (memory to store three brightness values corresponding to primary colors in this case), which controls the color buffer and interpolates the brightness value of span data. Because the control operation of the color buffer depends on Attr values, it is described for each value. When assuming the brightness value of span data as "I" (one value representing three values);
(1) For Attr = NT, FP, and BP:
   The brightness section executes no operation.
(2) For Attr = IT:
   The section initializes the color buffer.
(3) For Attr = OT:
   The section outputs values for the color buffer to the outside.
(4) For Attr = OP:
   The section updates the color buffer with I if the address- and depth-section conditions and "BAF = 1" are met.

For the interpolation of brightness values, when assuming the variation of the brightness value for each pixel of input span data as dI", the brightness section directly outputs "I" as the brightness value to the pixel processor of the subsequent stage unless the condition checked by the address section is met, and outputs "I + dI" to the subsequent stage when the condition is met. It directly outputs "dI" to the subsequent stage as the variation of brightness values, regardless of conditions.

Color buffer values outputted to the outside of the array are written in the pixels corresponding to the frame buffer and an image is generated.

## Claims

1. Image display apparatus comprising:
pixel data buffers for storing pixel data for pixel positions on a display screen, each said pixel position having a corresponding one of the pixel data buffers;
first buffers (Z) for storing first depth values for pixel positions on the back boundary surface of a clipping region, each said pixel position having a corresponding one of said first buffers;
means for generating a depth value and pixel data corresponding to a pixel position for an object to be displayed;
means to compare the generated depth value with the depth value stored in the first buffer corresponding to the pixel position; characterised by
second buffers (L) for storing second depth values for pixel positions on the front boundary surface of the clipping region, each said pixel position having a corresponding one of the second buffers; means to compare said generated depth value with the second depth values stored in the second buffers corresponding to said pixel position; and means to replace the pixel data in the corresponding pixel data buffer with the generated pixel data, when the generated depth value lies between the first and second depth values stored in the first and second buffers.

2. Apparatus as claimed in claim 1 comprising means arranged to replace the depth value in the corresponding first buffer (Z) with the generated depth value when the generated depth value lies between the first and second depth values.

3. Apparatus as claimed in claim 1 or claim 2 comprising a flag buffer (BAF) for indicating for each pixel position whether depth values on a boundary surface of the clipping region have been stored in the corresponding first or second buffer, and for making the operation of the means to replace the depth value in the corresponding first buffer and/or pixel data in the pixel buffer, dependent on the condition that said flag indicates that depth values on a surface of the clipping region have been stored in the corresponding first or second buffer.

4. Apparatus as claimed in any preceding claim comprising a display device (7).

5. An image display method comprising the steps of: storing first depth values for pixel positions on the back boundary surface of a clipping region in first buffers (Z) corresponding to the pixel positions;
generating a depth value corresponding to a pixel position for an object to be displayed;
comparing the generated depth value with the depth value stored in the first buffer (Z) corresponding to the pixel position; characterised by
storing second depth values for pixel positions on the front boundary surface of the clipping region in second buffers (L) corresponding to the pixel positions;
comparing said generated depth value with the second depth values stored in the second buffers (L) corresponding to said pixel position; and
replacing data in a corresponding pixel data buffer with generated pixel data for the pixel position, when the generated depth value lies between the first and second depth values stored in the first and second buffers.

6. A method as claimed in claim 5 comprising replacing the depth value in the corresponding first buffer with the generated depth value when the generated depth value lies between the first and second depth values.

7. A method as claimed in claim 5 or claim 6 comprising setting a flag buffer (BAF) for indicating for each pixel position whether depth values on a boundary surface of the clipping region have been stored in the corresponding first or second buffer, the depth value in the corresponding first buffer and/or pixel data in the pixel buffer being replaced only if said flag indicates that depth values on a surface of the clipping region have been stored in the corresponding first or second buffer.

## Patentansprüche

1. Bildanzeigegerät, folgendes umfassend:
Pixeldatenpuffer zum Speichern von Pixeldaten für Pixelpositionen auf einem Anzeigebildschirm, wobei jede der genannten Pixelpositionen einen entsprechenden Pixeldatenpuffer hat;
erste Puffer (Z) zum Speichern erster Tiefenwerte für Pixelpositionen auf der hinteren Grenzfläche eines Clipping-Bereichs, wobei jede der genannten Pixelpositionen einen entsprechenden Puffer der genannten ersten Puffer hat;
Mittel zum Erzeugen eines Tiefenwerts und zum Erzeugen von Pixeldaten, die einer Pixelposition für ein anzuzeigendes Objekt entsprechen;
Mittel zum Vergleichen des erzeugten Tiefenwerts mit dem in dem ersten Puffer gespeicherten Tiefenwert, der der Pixelposition entspricht; gekennzeichnet durch
zweite Puffer (L) zum Speichern zweiter Tiefenwerte für Pixelpositionen auf der vorderen Grenzfläche des Clipping-Bereichs, wobei jede der genannten Pixelpositionen einen entsprechenden Puffer der zweiten Puffer hat; Mittel zum Vergleichen des genannten erzeugten Tiefenwerts mit den zweiten Tiefenwerten, die in den zweiten Puffern gespeichert sind, die der genannten Pixelposition entsprechen; und Mittel, um die Pixeldaten in dem entsprechenden Pixeldatenpuffer durch die erzeugten Pixeldaten zu ersetzen, wenn der erzeugte Tiefenwert zwischen dem ersten und dem zweiten Tiefenwert liegt, die in dem ersten und dem zweiten Puffer gespeichert sind.

2. Gerät nach Anspruch 1, das Mittel umfaßt, die den Tiefenwert in dem betreffenden ersten Puffer (Z) durch den erzeugten Tiefenwert ersetzen können, wenn der erzeugte Tiefenwert zwischen dem ersten und dem zweiten Tiefenwert liegt.

3. Gerät nach Anspruch 1 oder Anspruch 2, umfassend einen Kennzeichenpuffer (BAF), um für jede Pixelposition anzuzeigen, ob Tiefenwerte auf einer Grenzfläche des Clipping-Bereichs in dem betreffenden ersten oder zweiten Puffer gespeichert wurden, und um die Funktion des Mittels zum Ersetzen des Tiefenwerts in dem betreffenden ersten Puffer und/oder der Pixeldaten in dem Pixelpuffer zu bewirken, unter der Voraussetzung, daß das genannte Kennzeichnen anzeigt, daß Tiefenwerte auf einer Fläche des Clipping-Bereichs in dem betreffenden ersten oder zweiten Puffer gespeichert wurden.

4. Gerät nach einem jeden vorangehenden Anspruch, eine Anzeigevorrichtung (7) umfassend.

5. Ein Bildanzeigeverfahren, folgende Schritte umfassend:
Speichern erster Tiefenwerte für Pixelpositionen auf der hinteren Grenzfläche eines Clipping-Bereichs in ersten Puffern (Z) die den Pixelpositionen entsprechen;
Erzeugen eines Tiefenwerts entsprechend einer Pixelposition für ein anzuzeigendes Objekt;
Vergleichen des erzeugten Tiefenwerts mit dem Tiefenwert, der in dem ersten Puffer (Z) gespeichert ist, der der Pixelposition entspricht; gekennzeichnet durch
Speichern zweiter Tiefenwerte für Pixelpositionen auf der vorderen Grenzfläche des Clipping-Bereichs in zweiten Puffern (L), die den Pixelpositionen entsprechen;
Vergleichen des genannten erzeugten Tiefenwerts mit den zweiten Tiefenwerten, die in den zweiten Puffern (L) gespeichert sind, die der genannten Pixelposition entsprechen; und
Ersetzen von Daten in einem betreffenden Pixeldatenpuffer durch erzeugte Pixeldaten für die Pixelposition, wenn der erzeugte Tiefenwert zwischen dem ersten und dem zweiten Tiefenwert liegt, die in dem ersten und dem zweiten Puffer gespeichert sind.

6. Ein Verfahren nach Anspruch 5, umfassend das Ersetzen des Tiefenwerts in dem betreffenden ersten Puffer durch den erzeugten Tiefenwert, wenn der erzeugte Tiefenwert zwischen dem ersten und dem zweiten Tiefenwert liegt.

7. Ein Verfahren nach Anspruch 5 oder Anspruch 6, umfassend das Setzen eines Kennzeichenpuffers (BAF), um für jede Pixelposition anzuzeigen, ob Tiefenwerte auf einer Grenzfläche des Clipping-Bereichs in dem entsprechenden ersten oder zweiten Puffer gespeichert wurden, wobei der Tiefenwert in dem entsprechenden ersten Puffer und/oder die Pixeldaten in dem Pixelpuffer nur dann ausgetauscht werden, wenn durch das genannte Kennzeichen angezeigt wird, daß Tiefenwerte auf einer Fläche des Clipping-Bereichs in dem entsprechenden ersten oder zweiten Puffer gespeichert wurden.

## Revendications

1. Appareil d'affichage d'image comprenant :
des mémoires tampon de données de pixel destinées à mémoriser des données de pixel pour des positions de pixels sur un écran d'affichage, chacune desdites positions de pixels ayant une mémoire tampon correspondante parmi les mémoires tampon de données de pixel,
des premières mémoires tampon (Z) destinées à mémoriser les premières valeurs de profondeurs pour les positions de pixels sur la surface limite arrière d'une région de limitation, chacune desdites positions de pixels ayant une mémoire tampon correspondante parmi lesdites premières mémoires tampon,
un moyen pour générer une valeur de profondeur et des données de pixel correspondant à une position de pixel pour un objet devant être affiché,
un moyen pour comparer de la valeur de profondeur générée à la valeur de profondeur mémorisée dans la première mémoire tampon correspondant à la position de pixel, caractérisé par
des secondes mémoires tampon (L) destinées à mémoriser des secondes valeurs de profondeurs pour des positions de pixels sur la surface limite avant de la région de limitation, chacune desdites positions de pixels ayant une mémoire tampon correspondante parmi les secondes mémoires tampon, un moyen pour comparer ladite valeur de profondeur générée aux secondes valeurs de profondeurs mémorisées dans les secondes mémoires tampon correspondant à ladite position de pixel, et un moyen pour remplacer les données de pixel dans la mémoire tampon de données de pixel correspondante par les données de pixel générées, lorsque la valeur de profondeur générée se trouve entre la première et la seconde valeur de profondeur mémorisée dans les première et seconde mémoire tampon.

2. Appareil selon la revendication 1 comprenant des moyens agencés pour remplacer la valeur de profondeur dans la première mémoire tampon correspondante (Z) par la valeur de profondeur générée lorsque la valeur de profondeur générée se trouve entre la première et la seconde valeur de profondeur.

3. Appareil selon la revendication 1 ou la revendication 2 comprenant une mémoire tampon d'indicateur (BAF) destinée à indiquer pour chaque position de pixel si les valeurs de profondeurs sur une surface limite de la région de limitation ont été mémorisées dans la première ou seconde mémoire tampon correspondante, et pour réaliser la mise en oeuvre des moyens destinés à remettre la valeur de profondeur dans la première mémoire tampon correspondante et/ou les données de pixel dans la mémoire tampon de pixel à la condition que ledit indicateur indique que les valeurs de profondeurs sur une surface de la région de limitation ont été mémorisées dans la première ou la seconde mémoire tampon correspondante.

4. Appareil selon l'une quelconque des revendications précédentes comprenant un dispositif d'affichage (7).

5. Procédé d'affichage d'image comprenant les étapes consistant à :
mémoriser les premières valeurs de profondeurs pour les positions de pixels sur la surface limite arrière d'une région non utilisé dans des premières mémoires tampon (Z) correspondant aux positions de pixels,
générer une valeur de profondeur correspondant à une position de pixel pour un objet devant être afficher,
comparer la valeur de profondeur générée avec la valeur de profondeur mémorisée dans la première mémoire tampon (Z) correspondant à la position de pixel, caractérisé par
la mémorisation des secondes valeurs de profondeurs pour les positions de pixels sur la surface limite avant de la région de limitation dans les secondes mémoires tampon (L) correspondant aux positions de pixels,
la comparaison de ladite valeur de profondeur générée aux secondes valeurs de profondeurs mémorisées dans les secondes mémoires tampon (L) correspondant à ladite position de pixel, et
le remplacement des données dans une mémoire tampon de données de pixel correspondante par des données de pixel générées pour la position de pixel lorsque la valeur de profondeur générée se trouve entre les première et seconde valeurs de profondeurs mémorisées dans les première et seconde mémoires tampon.

6. Procédé selon la revendication 5 comprenant le remplacement de la valeur de profondeur dans la première mémoire tampon correspondante par la valeur de profondeur générée lorsque la valeur de profondeur générée se trouve entre les première et seconde valeurs de profondeurs.

7. Procédé selon la revendication 5 ou la revendication 6 comprenant l'établissement d'une mémoire tampon d'indicateurs (BAF) destinée à indiquer pour chaque position de pixel si les valeurs de profondeurs sur une surface limite de la région de limitation ont été mémorisées dans la première ou la seconde mémoire tampon correspondante, la valeur de profondeur dans la première mémoire tampon correspondante et/ou les données de pixel dans la mémoire tampon de pixel n'étant remplacées que si ledit indicateur montre que les valeurs de profondeurs sur une surface de la région de limitation ont été mémorisées dans la première ou la seconde mémoire tampon correspondante.
